# EUROPÄISCHE PATENTSCHRIFT

(11) **EP 1 994 700 B1**
(45) Veröffentlichungstag und Bekanntmachung des Hinweises auf die Patenterteilung: **04.07.2012**
(21) Anmeldenummer: 07704480.8
(22) Anmeldetag: 09.02.2007
(51) Int. Cl.: H04L 25/06, H03K 5/156

(54) **VERFAHREN UND SYSTEM ZUR KOMPENSATION ASYMMETRISCHER VERZÖGERUNGEN**
METHOD AND SYSTEM FOR COMPENSATING FOR ASYMMETRIC DELAYS
PROCEDE ET SYSTEME POUR LA COMPENSATION DE PROPAGATIONS DIFFEREES ASYMETRIQUES

(30) Priorität: 08.03.2006 DE 102006011059
(43) Veröffentlichungstag der Anmeldung: 26.11.2008
(73) Patentinhaber: Robert Bosch GmbH, 70442 Stuttgart (DE)
(72) Erfinder: ROHATSCHEK, Andreas-Juergen, 73249 Wernau/Neckar (DE)
(86) Internationale Anmeldenummer: PCT/EP2007/051264
(87) Internationale Veröffentlichungsnummer: WO 2007/101767

(56) Entgegenhaltungen:
- EP-A- 0 309 849
- EP-A- 1 335 520
- US-B1- 6 586 964
- UHLHORN R W: "A robust fibre optic active star coupler for the SAE linear token-passing multiplex data bus" PROCEEDINGS OF THE IEEE 1988 NATIONAL AEROSPACE AND ELECTRONICS CONFERENCE: NAECON 1988, 23. Mai 1988 (1988-05-23), Seiten 174-181, XP010076888 Dayton, US

## Beschreibung

Die vorliegende Erfindung betrifft ein Verfahren zur Übertragung von in einem Signal codierten Daten zwischen einem sendenden Teilnehmer und einem empfangenden Teilnehmer eines Datenübertragungssystems über eine Netzwerkstruktur des Datenübertragungssystems.

### Stand der Technik

Die Vernetzung von Steuergeräten, Sensorik und Aktuatorik mit Hilfe eines Kommunikationssystems und einer Kommunikationsverbindung bspw. in Form eines Bussystems hat in den letzten Jahren beim Bau von modernen Kraftfahrzeugen oder auch im Maschinenbau, insbesondere im Werkzeugmaschinenbereich, als auch in der Automatisierung drastisch zugenommen. Synergieeffekte durch Verteilung von Funktionen auf mehrere Steuergeräte können dabei erzielt werden. Man spricht hierbei von verteilten Systemen.

Die Kommunikation zwischen verschiedenen Teilnehmern eines solchen Datenübertragungssystems findet mehr und mehr über ein Bussystems statt. Der Kommunikationsverkehr auf dem Bussystem, Zugriffs- und Empfangsmechanismen, sowie Fehlerbehandlung werden über ein Protokoll geregelt. Ein bekanntes Protokoll ist beispielsweise das FlexRay-Protokoll, wobei derzeit die FlexRay-Protokollspezifikation v2.1 zu Grunde liegt. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Zyklus, so dass der Zeitpunkt, zu dem eine Botschaft über den Bus übertragen wird, exakt vorausgesagt werden kann und der Buszugriff deterministisch erfolgt.

Um die Bandbreite für die Übertragung von Botschaften auf dem Bussystem optimal zu nutzen, unterteilt FlexRay den Zyklus in einen statischen und einen dynamischen Teil. Die festen Zeitschlitze befinden sich dabei im statischen Teil am Anfang eines Buszyklusses. Im dynamischen Teil werden die Zeitschlitze dynamisch vorgegeben. Darin wird nun der exklusive Buszugriff jeweils nur für eine kurze Zeit, für die Dauer mindestens eines sogenannten Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird.

Dabei kommuniziert FlexRay über eine oder zwei physikalisch getrennte Leitungen mit einer Datenrate von jeweils maximal 10 Mbit/sec. Selbstverständlich kann FlexRay aber auch mit niedrigeren Datenraten betrieben werden. Die beiden Kanäle entsprechen dabei der physikalischen Schicht, insbesondere des sogenannten OSI (Open System Architecture) Schichtenmodells. Diese dienen hauptsächlich der redundanten und damit fehlertoleranten Übertragung von Botschaften, können jedoch auch unterschiedliche Botschaften übertragen, wodurch sich dann die Datenrate verdoppeln würde. Es ist auch denkbar, dass sich das über die Verbindungsleitungen übertragene Signal aus der Differenz von über die beiden Leitungen übertragenen Signalen ergibt. Die physikalische Schicht ist derart ausgestaltet, dass sie eine elektrische aber auch optische Übertragung des oder der Signale über die Leitung(en) oder eine Übertragung auf anderem Wege ermöglicht.

Um synchrone Funktionen zu realisieren und die Bandbreite durch kleine Abstände zwischen zwei Botschaften zu optimieren, benötigen die Teilnehmer in dem Kommunikationsnetzwerk eine gemeinsame Zeitbasis, die sogenannte globale Zeit. Für die Uhrensynchronisation werden Synchronisationsnachrichten im statischen Teil des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

Bei der Übertragung von Daten oder Botschaften über ein solches Bussystem werden Impulse verzerrt, weil fallende (High-to-Low) bzw. steigende (Low-to-High) Flanken auf dem Übertragungsweg unterschiedlich stark verzögert werden. Wird der gesendete Impuls im Empfänger mit dem dort vorliegenden Abtasttakt (der sogenannter Sampling Rate) mehrfach (zum Beispiel n-mal pro Bit) abgetastet, so entscheidet die Lage des Abtastpunktes, d.h. die Auswahl genau eines dieser n Abtastwerte, ob das Datum richtig oder falsch abgetastet wird. Das ist insbesondere dann schwierig, wenn der Abtastzeitpunkt auf eine Flanke des Signals Bezug nimmt und relativ dazu auch über viele Perioden des Abtasttaktes mehrere binäre Datenwerte (Bits) des Senders auswertet. Hier wirkt sich zusätzlich zu einer Impulsverzerrung auch noch die Taktfrequenzabweichung zwischen Sender und Empfänger aus. Dabei kann das abzutastende Signal vorbehandelt sein, um zum Beispiel kurzzeitige Störungen auszufiltern. Ein solches Filter kann durch das Auswerten mehrerer Abtastsignale in der zeitlichen Reihenfolge mit einer Mehrheitsentscheidung (sog. Voting) sein. Es hat sich gezeigt, dass die starre Festlegung des Abtastzeitpunktes ohne Berücksichtigung der asymmetrischen Verzögerungen auf den unterschiedlichen Übertragungswegen zu Problemen führt.

Die Verzögerung zwischen steigender und fallender Flanke eines Signals wird auch als Impulsverzerrung oder asymmetrische Verzögerung bezeichnet. Asymmetrische Verzögerungen können sowohl systematische als auch stochastische Ursachen haben. Beim FlexRay-Protokoll wirken sich systematische Verzögerungen nur auf die steigenden Flanken aus, da auf die fallenden Flanken synchronisiert wird. Stochastische Verzögerungen haben Auswirkungen sowohl auf die steigenden als auch auf die fallenden Flanken und sind durch Rauschvorgänge oder EMV-Jitter verursacht. Grundsätzlich kann gesagt werden, dass die Übertragung des Signals über die Netzwerkstruktur mit passiven und aktiven Netzwerkelementen, z.B. Verbindungsleitungen, Übertrager, Drosseln, Kommunikations-Controller, Sende-Empfangs-Einrichtungen oder Pegel-Wandler (sog. Transceiver), aktive Sterne, etc., zu der asymmetrischen Verzögerung führt, da steigende und fallende Signalflanken unterschiedlich durch die Netzwerkstruktur propagiert werden.

Durch die starre Wahl des Abtastzeitpunktes pro Bit (zum Beispiel bei n Abtastwerten pro Bit auf n/2, in der Mitte eines Bits) ist sowohl der Einfluss der asymmetrischen Verzerrung als auch die Frequenzabweichung und die zusätzliche Zeitdiskretisierung durch die Abtastung ein Problem und stellt hohe Anforderungen an den Übertragungskanal. Eine Erhöhung der Flankensteilheit zur Verringerung der asymmetrischen Verzögerungen brächte zwar Vorteile für das Timing, würde aber andererseits technisch anspruchsvollere und damit teurere Komponenten voraussetzen und zudem das EMV-Verhalten des Datenübertragungssystems ungünstig beeinflussen. Deshalb ist es manchmal günstiger, die Flankensteilheit nicht so groß zu wählen, aber je nach Impulsverzerrung läuft man Gefahr, entweder an der einen oder der anderen Bitgrenze das falsche Datum auszuwerten.

Bei der Realisierung von FlexRay-Datenübertragungssystemen, insbesondere bei komplexen Systemen umfassend eine Netzwerkstruktur mit mehreren Sternkopplern und passiven Bauteilen, hat sich zudem gezeigt, dass die dort auftretenden asymmetrischen Verzögerungszeiten so groß sind, dass sie ein durch das FlexRay-Protokoll vorgegebenes Zeitbudget übersteigen. Gemäß FlexRay-Protokoll wird mit fallender BSS (Bit Start Sequence)-Flanke ein Abtastzähler synchronisiert, d.h. zurück auf 1 gesetzt. Bei einem Zählerstand von 5 wird abgetastet. Bei einer 8-fachen Überabtastung (sogenanntes Oversampling), wie sie derzeit in FlexRay vorgesehen ist, verbleiben zwischen dem Abtastzeitpunkt (5. Abtastwert) und dem 8. Abtastwert also noch 3 Abtasttakte die bei einem Kommunikations-Controller-Takt von 80 MHz jeweils 12,5 ns, in der Summe also einem Zeitbudget von 37,5 ns entsprechen Dieses Zeitbudget dient eigentlich zum Ausgleich von asymmetrischen Verzögerungen aufgrund der Differenz von fallender zu steigender Flankensteilheit. Falls jedoch - wie dies bei komplexen Netztopologien bzw. Netzwerkstrukturen der Fall sein kann - die asymmetrische Verzögerung das vorgesehene Zeitbudget übersteigt, führt dies dazu, dass bei einer Abtastung beim 5. Abtasttakt (Zählerstand des Abtastzählers auf 5) ein falscher Wert ermittelt wird, weil dasjenige Bit, das eigentlich hätte abgetastet werden sollen, auf Grund der asymmetrischen Verzögerung schon zu einem früheren Zeitpunkt anlag und durch den frühen Flankenwechsel nicht mehr anliegt. Eine analoge Behandlung gilt für eine asymmetrische Verzögerung nach spät. Dann steht ein Zeitbudget von 4 Abtasttakten entsprechend 50 ns zur Verfügung. Die Folge eines Übersteigens des Zeitbudgets nach früh oder spät sind Decodierungsfehler, es werden also falsche Daten empfangen.

Diese Decodierungsfehler können zwar durch geeignete Fehlererkennungsalgorithmen erkannt werden, so dass eine erneute Übertragung des Bits oder des gesamten Datenrahmens veranlasst werden kann. Als Fehlererkennungsalgorithmus kann beispielsweise ein Cyclic Redundancy Check (CRC) eingesetzt werden. Der Nachteil eines häufigen Ansprechens des Fehlererkennungsalgorithmus ist jedoch in der damit verbundenen schlechteren Verfügbarkeit des Datenübertragungssystems zu sehen. Zusammenfassend kann gesagt werden, dass durch das FlexRay-Protokoll Vorgaben gemacht werden, die der Physical Layer - zumindest bei komplexen Netzwerkstrukturen - nicht halten kann.

Aus einer anderen bereits eingereichten, aber noch nicht veröffentlichten deutschen Patentanmeldung 10 2005 037 263 sowie aus einer weiteren bereits angemeldeten, aber noch nicht veröffentlichten deutschen Patentanmeldung 10 2005 060 903 sind bereits Möglichkeiten beschrieben, wie die Häufigkeit von Dekodierungsfehlern aufgrund einer asymmetrischen Verzögerung des übertragenen Signals verringert und die Robustheit des Datenübertragungssystems gegenüber asymmetrischen Verzögerungen erhöht werden kann. Dabei wird in beiden Fällen eine Änderung in der logischen Ebene des Kommunikations-Controllers des empfangenden Teilnehmers vorgeschlagen. Insbesondere wurde in der DE 10 2005 060 903 vorgeschlagen, in dem Kommunikations-Controller des empfangenden Teilnehmers die asymmetrische Verzögerung des empfangenen Signals zu messen und, statt eines festen Abtastzeitpunktes, die Bits der in dem empfangenen Signal codierten Daten zu variablen Zeitpunkten abzutasten, wobei der optimale Abtastzeitpunkt in Abhängigkeit von der gemessenen asymmetrischen Verzögerung eingestellt wird. In der DE 10 2005 037 263 wird darüber hinaus vorgeschlagen, auf Grundlage der gemessenen asymmetrischen Verzögerung vor der eigentlichen Abtastung einen Abtastbereich umfassend mehrere Abtasttakte zu definieren, wobei die Datenbits dann nicht mehr zu einem einzigen festen oder variablen Abtastzeitpunkt decodiert werden. Vielmehr erfolgt die Dekodierung des Datenbits unter Berücksichtigung der zu den Abtastzeitpunkten in dem definierten Bereich decodierten Werte. Auf diese Weise lassen sich bei einem 8-fach Oversampling asymmetrische Verzögerungen von bis zu 87,5 ns kompensieren, ohne dass es zu Dekodierungsfehlern kommt. Bei einem noch höheren Oversampling könnten sich sogar entsprechend höhere asymmetrische Verzögerungszeiten kompensieren lassen.

Alternativ oder zusätzlich zu den bekannten Verfahren wird gemäß der vorliegenden Erfindung eine Möglichkeit vorgeschlagen, die Kompensation der asymmetrischen Verzögerung nicht durch Änderungen in der logischen Ebene des Kommunikations-Controllers des empfangenden Teilnehmers, sondern vielmehr auf der physikalischen Ebene auf dem Übertragungskanal beziehungsweise in der Netzwerkstruktur zu erzielen.

Aus der Schrift Uhlhorn R W: "A robust fibre optic active star coupler fort he SAE linear token-passing multiplex data bus" Proceedings of the IEEE 1988 National Aerospace and Electronics Conference, XP010076888, S.174-181 wird das Design eines aktiven Sternkopplers offenbart sowie eine Methode zum Neuformen eines Datensignales, auch bekannt als Bitreshaping beschrieben. Die EP 1335520 A beschreibt ein Multiplex-Bussystem sowie die Korrektur eines Tastverhältnisses eines digitalen Signals in diesem Bussystem.

### Offenbarung der Erfindung

Der vorliegenden Erfindung liegt deshalb die Aufgabe zugrunde, eine Möglichkeit zu schaffen, wie Daten in einem Datenübertragungssystem mit hoher Übertragungsrate, hoher Zuverlässigkeit und hoher Verfügbarkeit des Datenübertragungssystems übertragen werden können, wobei gleichzeitig eine hohe Robustheit des Datenübertragungssystems gegenüber asymmetrischen Verzögerungen gewährleistet sein sollte. Zur Lösung dieser Aufgabe werden ein Verfahren und eine Vorrichtung gemäß den unabhängigen Ansprüchen vorgeschlagen.

Die Ermittlung der asymmetrischen Verzögerung des übertragenen Signals kann bereits ab Werk abgeschätzt, modelliert oder gemessen werden. Die ab Werk ermittelte asymmetrische Verzögerung wird entweder direkt oder erst nach Umwandlung in einen entsprechenden Kompensationswert abgespeichert. Zur Kompensation der asymmetrischen Verzögerung während des Betriebs des Datenübertragungssystems wird dann auf den abgespeicherten Wert zugegriffen und die asymmetrische Verzögerung zumindest teilweise kompensiert.

Des Weiteren ist es denkbar, dass die asymmetrische Verzögerung des übertragenen Signals gewissermaßen online während des Betriebs des Datenübertragungssystems ermittelt wird. Die online ermittelte asymmetrische Verzögerung kann abgeschätzt, modelliert oder gemessen werden. Die ermittelte asymmetrische Verzögerung kann entweder zunächst abgespeichert und später zur Kompensation herangezogen werden oder aber direkt zur Kompensation der asymmetrischen Verzögerung eingesetzt werden. Anhand der online ermittelten und abgespeicherten Verzögerungswerte kann auch eine Auswertung der in der Vergangenheit aufgetretenen asymmetrischen Verzögerungswerte beispielsweise zur Detektion von Fehlern bei der Messung aktueller asymmetrischer Verzögerungswerte oder zur Modellierung oder Vorhersage zukünftig zu erwartender asymmetrischer Verzögerungswerte vorgenommen werden.

Zur Verzögerung der weniger stark verzögerten Signalflanken ist in der Netzwerkstruktur eine programmierbare Verzögerungseinheit angeordnet. Programmierbare Verzögerungseinheiten sind an sich aus dem Stand der Technik bekannt. Eine solche Verzögerungseinheit wird beispielsweise von der Firma Dallas Semiconductor Corp., Dallas, Texas, 75244, USA, einer Tochtergesellschaft von Maxim Integrated Products, Inc., Sunnyvale, Calif. 94086, USA unter der Bezeichnung "DS1021-50" angeboten und vertrieben. Bei der bekannten Verzögerungseinheit von Dallas Semiconductor können Verzögerungszeiten von 10 - 140 ns mit einer Genauigkeit von 0,5 ns eingestellt werden. Die Programmierung der bekannten Verzögerungseinheit erfolgt durch Setzen oder Löschen mehrerer Bits, beispielsweise von 8 Bits. Eine gröbere Auflösung kann auch sinnvoll sein, wenn beispielsweise 25 ns mit 3 ns Genauigkeit kompensiert werden.

### Vorteile der Erfindung

Ein entscheidender Unterschied zum bekannten Stand der Technik ist darin zu sehen, dass mit der vorliegenden Erfindung eine Kompensation der asymmetrischen Verzögerung von übertragenen Signalen beziehungsweise eine Erhöhung der Robustheit des Datenübertragungssystems gegenüber asymmetrischen Verzögerungen erzielt werden kann, ohne dass es einer Änderung in der logischen Ebene der empfangenden Teilnehmer beziehungsweise deren Kommunikations-Controller bedarf. Die asymmetrische Verzögerung wird erfindungsgemäß also auf der physikalischen Ebene im Übertragungskanal reduziert beziehungsweise sogar kompensiert, so dass in den empfangenden Teilnehmern nur noch eine geringe oder sogar keine asymmetrische Verzögerung mehr feststellbar ist. Das hat den Vorteil, dass in den empfangenden Teilnehmern für Kommunikations-Controller- und/oder für Transceiver-Bausteine herkömmliche Bausteine, unter Umständen sogar qualitativ minderwertigere und dadurch deutlich kostengünstigere Bausteine eingesetzt werden können, ohne dass es zu Decodierungsfehlern käme.

Selbstverständlich ist es aber auch möglich, die vorliegende Erfindung mit den in der DE 10 2005 037 263 und der DE 10 2005 060 903 vorgeschlagenen Teilnehmern mit verbesserter Abtastung des empfangenen Signals zu verwenden.

Der erfindungsgemäße Vorschlag wird beispielhaft anhand eines FlexRay-Datenübertragungssystems beschrieben. Dies ist aber nicht als Einschränkung im Hinblick auf die Erfindung zu verstehen. Die vorliegende Erfindung kann vielmehr für eine Vielzahl unterschiedlicher Arten von Datenübertragungssystemen eingesetzt werden und ist ohne Weiteres auf vergleichbare Systeme übertragbar. Insbesondere ist an einen Einsatz des erfindungsgemäßen Vorschlags in Datenübertragungssystemen gedacht, die Daten nach dem TTP/C- (Time Triggered Protocol Class C), dem CAN-(Controller Area Network) oder dem TTCAN- (Time Triggered CAN) Protokoll übertragen.

In FlexRay-Datenübertragungssystemen ergibt sich bei einer Datenübertragungsrate von 10 Mbit/sec eine nominale Bitbreite von 100 ns. Derzeit verfügbare FlexRay-Transceiver-Bausteine benötigen eine minimale Bitzeit von etwa 80 ns, kürzere Bitzeiten können von den Transceiver-Bausteinen ohne zusätzliche Einschränkungen, beispielsweise zusätzliche Asymmetrie, nicht mehr erkannt bzw. verarbeitet werden. Asymmetrische Verzögerungen der übertragenen Signale führen jedoch in dem empfangenen Teilnehmer zu zum Teil stark verkürzten Bitzeiten. So wird beispielsweise die nominale Bitbreite von 100 ns bei einer asymmetrischen Verzögerung von 60 ns auf eine Bitbreite von nur noch 40 ns verkürzt. Die derzeit gängigen FlexRay-Transceiver-Bausteine könnten eine solch kurze Bitzeit überhaupt nicht verarbeiten. Durch die vorliegende Erfindung ist es jedoch möglich, dass die asymmetrische Verzögerung deutlich verringert wird, beispielsweise auf 5 ns, so dass die beim empfangenden Teilnehmer verfügbare Bitbreite noch 95 ns beträgt und somit noch deutlich über der von dem FlexRay-Transceiver-Baustein geforderten minimalen Bitbreite von etwa 80 ns liegt.

Gemäß einer vorteilhaften Weiterbildung der vorliegenden Erfindung wird vorgeschlagen, dass die asymmetrische Verzögerung anhand eines Abstands eines zwingend in einem in dem Datenübertragungssystem verwendeten Übertragungsprotokoll vorgesehenen Wechsels des Signals von steigender zu fallender Flanke oder von fallender zu steigender Flanke gemessen wird. Vorteilhafterweise wird der Abstand zwischen einer steigenden Flanke einer Frame Start Sequenz (FSS) und einer fallenden Flanke einer Byte Start Sequenz (BSS) eines Datenrahmens gemessen. Die Messung wird vorzugsweise für jeden aktuellen Datenübertragungsweg mindestens einmal vorgenommen. Eine Erhöhung der Anzahl der Messwerte verringert dabei den Einfluss von stochastischen Verfälschungen. Insbesondere kann man die Messungen auch während der Datenübertragung weiter fortführen und ggf. die Kompensation der asymmetrischen Verzögerung noch vor der Decodierung der Datenbits im Laufe der Übertragung adaptiv anpassen. Es ist auch möglich, Fehler zu erkennen, wenn aus mehrfachen Messungen widersprüchliche Messwerte für die asymmetrische Verzögerung resultieren sollten.

Es ist denkbar, an einer oder mehreren beliebigen Stellen in der Netzwerkstruktur des Datenübertragungssystems programmierbare Verzögerungseinheiten vorzusehen, welche die asymmetrische Verzögerung der übertragenen Signale gezielt reduzieren beziehungsweise sogar kompensieren. Die Kompensation der asymmetrischen Verzögerung mit Hilfe der programmierbaren Verzögerungseinheit kann auf Grundlage von vor dem Einsatz des Datenübertragungssystems, das heißt vor der eigentlichen Datenübertragung, ermittelten Werten für die asymmetrische Verzögerung des Signals erfolgen. Die Ermittlung der asymmetrischen Verzögerungswerte im Vorfeld der Datenübertragung kann beispielsweise ab Werk oder anhand des einsatzbereiten, beispielsweise in ein Kraftfahrzeug eingebauten, Datenübertragungssystems durch Abschätzung, Modellierung oder Messung erfolgen.

Wesentlich flexibler, sicherer und zuverlässiger ist jedoch ein adaptives Verfahren, bei dem während der eigentlichen Datenübertragung die asymmetrische Verzögerung des übertragenen Signals gewissermaßen online ermittelt, vorzugsweise gemessen, wird. Zur Realisierung dieses adaptiven Verfahrens sind der programmierbaren Verzögerungseinheit noch Mittel zum Messen der asymmetrischen Verzögerung des übertragenen Signals zugeordnet. Diese Mess- und Kompensationsvorrichtung mit Mitteln zum Messen der programmierbaren Verzögerungseinheit und zum zumindest teilweise Kompensieren der asymmetrischen Verzögerung des Signals können - wie gesagt - an beliebigen Stellen innerhalb der Netzwerkstruktur, auf jeden Fall jedoch vor den Abtastmitteln (sog. Decodern) zum Abtasten eines jeden Bits der in dem Signal codierten Daten in dem empfangenden Teilnehmer angeordnet sein. Denkbar ist insbesondere eine Anordnung von einer oder mehreren solcher Mess- und Kompensationsvorrichtungen in einer Verbindungsleitung der Netzwerkstruktur, in einem aktiven oder passiven Stern der Netzwerkstruktur oder in einer Sende-Empfangs-Einheit (einem sog. Transceiver) oder in einem Kommunikations-Controller eines empfangenden Teilnehmers.

### Zeichnungen

Weitere Vorteile und vorteilhafte Ausgestaltungen der Erfindung ergeben sich aus der nachfolgenden Figurenbeschreibung und den dazugehörigen Figuren. Es zeigen:
- Figur 1: eine erfindungsgemäße Vorrichtung zum Messen und teilweise Kompensieren einer asymmetrischen Verzögerung eines über ein Datenübertragungssystem übertragenen Signals gemäß der vorliegenden Erfindung;
- Figur 2: Signalverläufe der erfindungsgemäßen Vorrichtung aus Figur 1;
- Figur 3: eine zwingend in einem Datenübertragungssystem verwendeten Übertragungsprotokoll vorgesehenen Wechsel des Signals von steigender Flanke einer Frame Start Sequenz (FSS) zu fallender Flanke einer Byte Start Sequenz (BSS) zum Messen der asymmetrischen Verzögerung gemäß der vorliegenden Erfindung;
- Figur 4: ein erfindungsgemäßes Datenübertragungssystem mit einer in der Netzwerkstruktur angeordneten Vorrichtung zum Messen und teilweise Kompensieren der asymmetrischen Verzögerung des übertragenen Signals;
- Figur 5: einen erfindungsgemäßen Kommunikations-Controller eines Datenübertragungssystems mit einer Vorrichtung zum Messen und zumindest teilweise Kompensieren der asymmetrischen Verzögerung des übertragenen Signals;
- Figur 6: einen erfindungsgemäßen Transceiver eines Kommunikations-Controllers eines Datenübertragungssystems, mit einer Vorrichtung zum Messen und zumindest teilweise Kompensieren der asymmetrischen Verzögerung des übertragenen Signals;
- Figur 7: einen Signalverlauf bei fallender beziehungsweise steigender Flanke in einem Datenübertragungssystem ohne Kompensation der asymmetrischen Verzögerung;
- Figur 8: Verläufe eines von einem sendenden Teilnehmer ausgesandten und eines von einem empfangenden Teilnehmer empfangenen Signals ohne Kompensation der asymmetrischen Verzögerung;
- Figur 9: ein aus dem Stand der Technik bekanntes funktionierendes Verfahren zum Decodieren eines Signals beim fünften Abtastpunkt;
- Figur 10: ein aus dem Stand der Technik bekanntes Verfahren zum Decodieren eines Signals beim fünften Abtastpunkt mit Decodierungsfehlern; und
- Figur 11: ein Beispiel für eine Signalkette eines Übertragungskanals in einem Datenübertragungssystem mit entsprechenden Beispielwerten für eine resultierende asymmetrische Verzögerung ohne den EMV-Anteil.

### Beschreibung der Ausführungsbeispiele

Die Vernetzung von Steuergeräten, Sensorik und Aktuatorik mit Hilfe eines Kommunikationssystems und einer Kommunikationsverbindung bspw. in Form eines Bussystems hat in den letzten Jahren beim Bau von modernen Kraftfahrzeugen oder auch im Maschinenbau, insbesondere im Werkzeugmaschinenbereich, als auch in der Automatisierung drastisch zugenommen. Synergieeffekte durch Verteilung von Funktionen auf mehrere Teilnehmer, die bspw. als Steuergeräte ausgebildet sind, können dabei erzielt werden. Man spricht hierbei von verteilten Systemen.

Die Kommunikation zwischen verschiedenen Teilnehmern eines solchen Datenübertragungssystems findet mehr und mehr über ein Bussystems statt. Der Kommunikationsverkehr auf dem Bussystem, Zugriffs- und Empfangsmechanismen, sowie Fehlerbehandlung werden über ein Protokoll geregelt. Ein bekanntes Protokoll ist beispielsweise das FlexRay-Protokoll, wobei derzeit die FlexRay-Protokollspezifikation v2.1 zu Grunde liegt. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Zyklus, so dass der Zeitpunkt, zu dem eine Botschaft über den Bus übertragen wird, exakt vorausgesagt werden kann und der Buszugriff deterministisch erfolgt. FlexRay kommuniziert über eine oder zwei physikalisch getrennte Leitungen mit einer Datenrate von jeweils maximal 10 Mbit/sec. Selbstverständlich kann FlexRay aber auch mit niedrigeren Datenraten betrieben werden. Die beiden Kanäle entsprechen dabei der physikalischen Schicht, insbesondere des sogenannten OSI (Open System Architecture) Schichtenmodells. Diese dienen hauptsächlich der redundanten und damit fehlertoleranten Übertragung von Botschaften, können jedoch auch unterschiedliche Botschaften übertragen, wodurch sich dann die Datenrate verdoppeln würde. Es ist ebenfalls denkbar, dass sich das übertragene Signal aus der Differenz der beiden über die Leitungen übertragenen Signale als ein Differenzsignal ergibt. Die Signalübertragung über die physikalische Schicht kann elektrisch, optisch oder auf eine beliebig andere Art erfolgen.

Um synchrone Funktionen zu realisieren und die Bandbreite durch kleine Abstände zwischen zwei Botschaften zu optimieren, benötigen die Teilnehmer in dem Kommunikationsnetzwerk eine gemeinsame Zeitbasis, die sogenannte globale Zeit. Für die Uhrensynchronisation werden Synchronisationsnachrichten im statischen Teil des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

Die Erfindung wird beispielhaft anhand eines FlexRay-Datenübertragungssystems beschrieben. Dies ist aber nicht als Einschränkung im Hinblick auf die Erfindung zu verstehen. Vielmehr kann die Erfindung für viele verschiedene Arten von Datenübertragungssystemen verwendet werden und ist ohne Weiteres auf vergleichbare Systeme (z. B. CAN, TTCAN, TTP/C etc.) übertragbar.

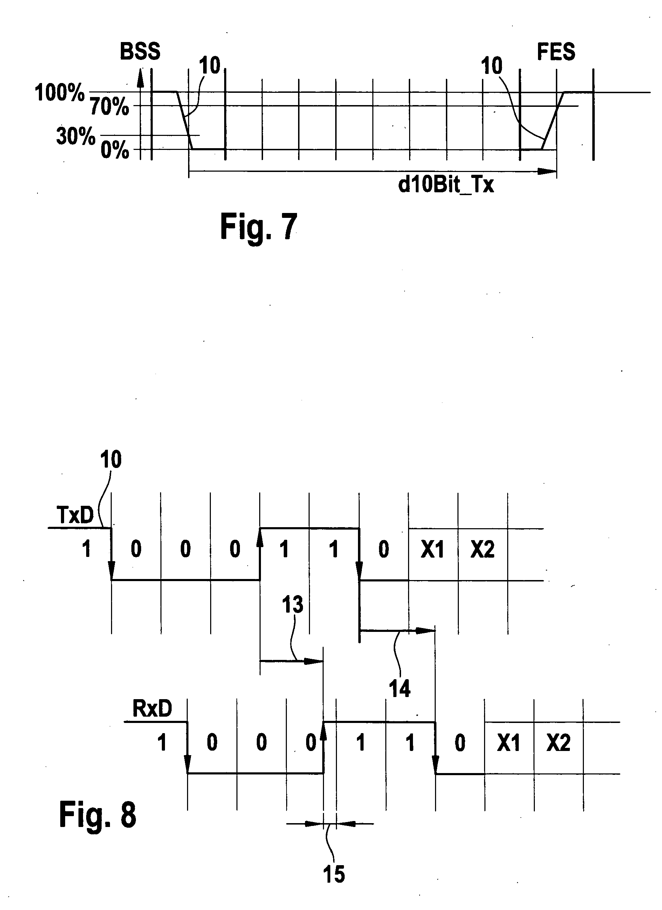

In Figur 7 ist gezeigt, dass Signale 10 im Bereich von Flankenwechseln von High nach Low oder von Low nach High keinen idealen rechteckigen Verlauf, sondern einen schrägen, rampenförmigen Verlauf aufweisen. Es ist zu erkennen, dass die Steigung der fallenden Flanke und der steigenden Flanke unterschiedlich stark ist. Dieser Unterschied führt dazu, dass die resultierenden Verzögerungen für steigende und fallende Flanken unterschiedlich sind (vgl. Figur 8). Abhängig von der Differenz der Verzögerungen für steigende Flanken 13 und fallende Flanken 14 ergibt sich eine asymmetrische Verzögerung 15. In Figur 8 ist oben der Verlauf des von einem sendenden Teilnehmer ausgesandten Signals 10 (TxD) und unten der Verlauf des von einem empfangenden Teilnehmer empfangenen Signals 10 (RxD) dargestellt. Die Verzögerungen 13, 14 betreffen die Differenz der entsprechenden Flanken zwischen dem ausgesandten Signal TxD und dem empfangenen Signal RxD.

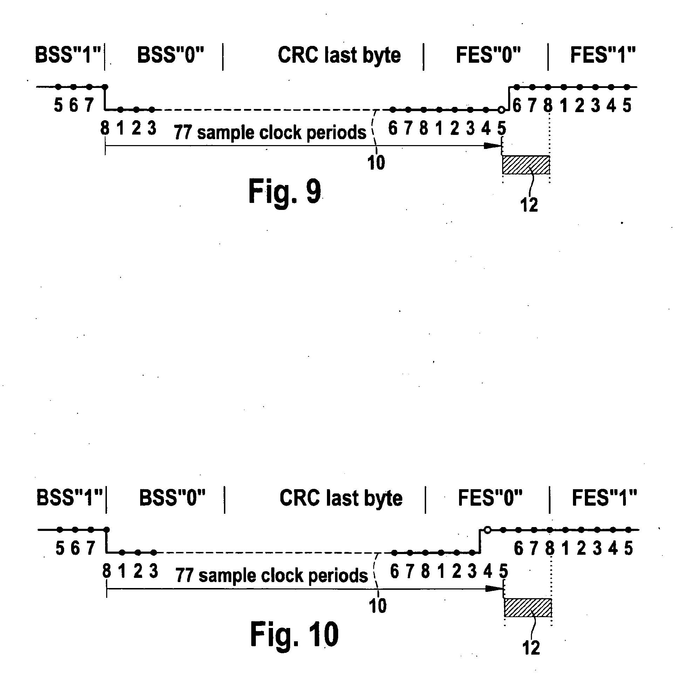

Bei der Übertragung von Daten oder Botschaften über ein Bussystem mit solchen Verzögerungen, werden Impulse verzerrt, weil High-to-Low- bzw. Low-to-High-Flanken auf dem Übertragungsweg unterschiedlich stark verzögert werden. Wird beim Stand der Technik der gesendete Impuls im Empfänger mit dem dort vorliegenden Abtasttakt (der sogenannten Sampling Rate) mehrfach (zum Beispiel 8-mal pro Bit beim 8-fach Oversampling) abgetastet, so entscheidet die Lage des Abtastpunktes, d.h. die Auswahl genau eines dieser 8 Abtastwerte, ob das Datum richtig oder falsch abgetastet wird. Dies wird nachfolgend anhand der Figuren 9 und 10 näher erläutert.

Das empfangene, zu decodierende Signal ist mit dem Bezugszeichen 10 bezeichnet. Die Dekodierung ist auf die fallende BSS (Byte Start Sequenz)-Flanke synchronisiert. Zum Zeitpunkt der Synchronisation beginnt ein Abtastzähler zu laufen und wird immer beim Erreichen des Zählerstands 8 rückgesetzt (z. B. auf 1 gesetzt). In den Beispielen aus den Figuren 9 und 10 wird das in dem Signal 10 codierte Datenbit jeweils beim 5. Abtastpunkt abgetastet. Die starre Festlegung des Abtastzeitpunktes ohne Berücksichtigung der asymmetrischen Verzögerungen auf den unterschiedlichen Übertragungswegen führt zu Problemen.

Durch die starre Wahl des Abtastzeitpunktes pro Bit (zum Beispiel bei 8 Abtastwerten pro Bit auf den 5. Abtastwert, in der Mitte eines Bits) ist sowohl der Einfluss der asymmetrischen Verzögerung als auch die Frequenzabweichung und die zusätzliche Zeitdiskretisierung durch die Abtastung ein Problem und stellt hohe Anforderungen an den Übertragungskanal. Eine Erhöhung der Flankensteilheit zur Verringerung der asymmetrischen Verzögerungen brächte zwar Vorteile für das Timing, würde aber andererseits technisch anspruchsvollere und damit teurere Komponenten (z.B. Transceiver, Kommunikations-Controller) voraussetzen und zudem das EMV-Verhalten des Datenübertragungssystems ungünstig beeinflussen. Aber je nach Impulsverzerrung läuft man Gefahr, entweder an der einen oder der anderen Bitgrenze das falsche Datum auszuwerten. Dies zeigt sich in den Figuren 9 und 10.

Der anstehende Flankenwechsel müsste idealerweise eigentlich genau zum Zählerstand 8 zwischen FES "0" und FES "1" erfolgen. Aufgrund der asymmetrischen Verzögerungen wird er in Figur 9 jedoch so weit in Richtung früh verschoben, dass der Flankenwechsel genau zwischen dem 5. und dem 6. Abtastwert erfolgt. Das ist in diesem Beispiel insofern unkritisch als der Abtastzeitpunkt noch vor dem Flankenwechsel liegt und das dem Flankenwechsel vorangehende Bit (0) korrekt decodiert werden kann.

In Figur 10 ist der Flankenwechsel aufgrund größerer asymmetrischer Verzögerungen noch weiter in Richtung früh verschoben, so dass er nun vor dem Abtastzeitpunkt zwischen dem 3. und dem 4. Abtastwert liegt. Es kann nun nicht mehr der richtige Bitwert (0) erfasst werden. Stattdessen wird zum Abtastzeitpunkt beim 5. Abtastwert ein falscher Bitwert (1) erfasst; es kommt zu einem Decodierungsfehler.

Bei der Realisierung von FlexRay-Datenübertragungssystemen, insbesondere bei Systemen mit relativ komplexen Netzwerkstrukturen oder Topologien umfassend mehrere Sternkoppler, sowie andere aktive und passive Bauteile, hat sich gezeigt, dass die dort auftretenden asymmetrischen Verzögerungszeiten so groß sind, dass sie ein durch das FlexRay-Protokoll vorgegebenes Zeitbudget übersteigen. Gemäß FlexRay-Protokoll wird mit fallender BSS (Byte Start Sequence)-Flanke der Abtastzähler synchronisiert, d.h. zurückgesetzt. Bei einem Zählerstand von 5 wird abgetastet. Bei einer 8-fachen Überabtastung (Oversampling), wie sie derzeit in FlexRay vorgesehen ist, verbleiben zwischen dem Abtastzeitpunkt (5. Abtastwert) und dem 8. Abtastwert also noch 3 Abtasttakte, die bei einem Kommunikations-Controller-Takt von 80 MHz jeweils 12,5 ns, in der Summe also einem Zeitbudget (12 in den Figuren 9 und 10) von 37,5 ns entsprechen. Dieses Zeitbudget 12 dient eigentlich zum Ausgleich von asymmetrischen Verzögerungen aufgrund der Differenz von fallender zu steigender Flankensteilheit. Falls jedoch - wie dies bei komplexen Netztopologien der Fall sein kann - die asymmetrische Verzögerung das vorgesehene Zeitbudget 12 übersteigt (vgl. Figur 10), führt dies dazu, dass bei einer Abtastung beim 5. Abtasttakt ein falscher Wert ermittelt wird.

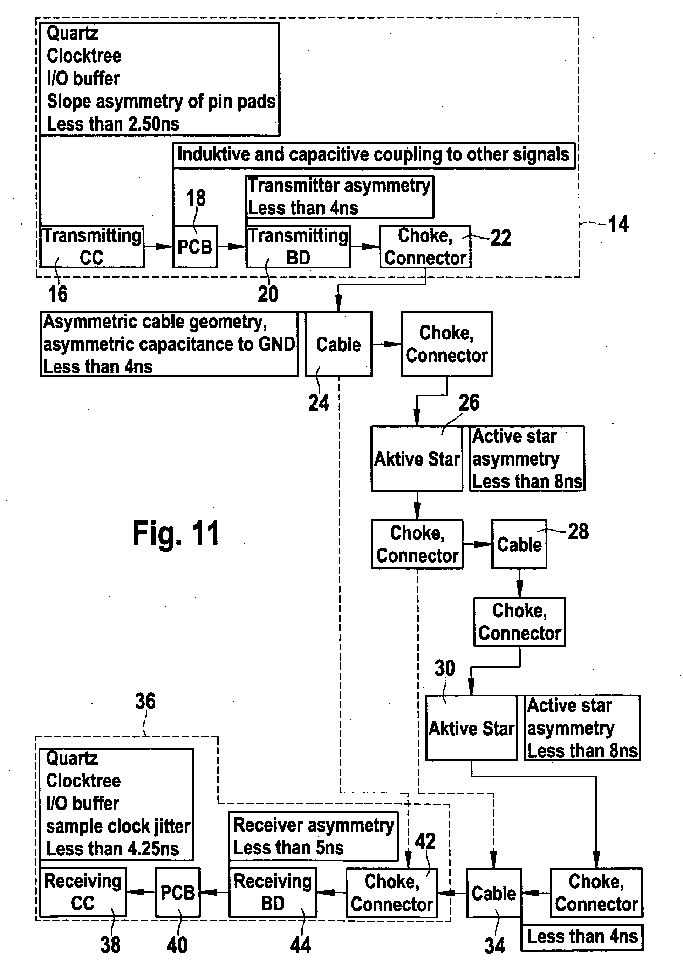

Ein Datenübertragungspfad (oder Übertragungskanal) in einer etwas komplexeren Netztopologie ist mit den entsprechenden resultierenden Verzögerungszeiten für die asymmetrische Verzögerung beispielhaft in Figur 11 dargestellt. Der Datenübertragungspfad umfasst einen sendenden Teilnehmer 14 mit einem Kommunikations-Controller (Communication Controller, CC) 16, einer bedruckten Leiterplatte mit Leiterbahnen und Bauteilen (Printed Circuit Board, PCB) 18 und einem Sender (Transmitter). Der Sender umfasst einen Bustreiber (Busdriver, BD) 20 und ein Abschlusselement (CMC, Common Mode Choke; Termination) 22. Der sendende Teilnehmer 14 ist über ein erstes passives Netzwerk 24, das im wesentlichen Signalleitungen umfasst, an einem ersten aktiven Sternknoten 26 angeschlossen, der unter anderem zwei separate Bustreiber umfasst.

Der erste Sternknoten 26 steht über ein zweites passives Netzwerk 28 (weitere Verbindungsleitungen) mit einem zweiten aktiven Sternknoten 30 in Verbindung, der ebenfalls zwei separate Bustreiber umfasst. Der Sternknoten 30 steht über ein weiteres passives Netzwerk 34 (weitere Verbindungsleitungen) mit einem empfangenden Teilnehmer 36 in Verbindung. Dieser umfasst einen Kommunikationscontroller (Communication Controller, CC) 38, eine bedruckte Leiterplatte (PCB) 40 und einen Empfänger (Receiver). Der Empfänger umfasst ein Abschlusselement (CMC; Termination) 42 und einen Bustreiber (Busdriver, BD) 44.

Die entsprechenden geschätzten, modellierten und/oder berechneten Zeitangaben für die asymmetrische Verzögerung (ohne den EMV-Anteil) sind in Figur 11 für die verschiedenen Komponenten angegeben und müssen aufsummiert werden, um die gesamte asymmetrische Verzögerung zu ermitteln. Mit den beispielhaften Zahlenwerten ergibt sich eine asymmetrische Verzögerung von etwa 39,75 ns. Das liegt oberhalb des zuvor ermittelten Zeitbudgets 12 von ca. 37,5 ns. Hinzu kommen noch stochastische EMV-Einflüsse, die die gesamte asymmetrische Verzögerung weiter erhöhen. Somit kann das aus dem Stand der Technik bekannte Decodierungsverfahren zu bestimmten Zeitpunkten bei der Netzwerktopologie aus Figur 11 unter Beibehaltung der gewünschten hohen Datenrate von etwa 10 Mbit/sec. nicht mehr ordnungsgemäß funktionieren.

Zusammenfassend kann gesagt werden, dass durch das FlexRay-Protokoll Vorgaben gemacht werden, die der Physical Layer - zumindest bei komplexen Netztopologien - nicht halten kann. Hier kann die vorliegende Erfindung Abhilfe schaffen.

Erfindungsgemäß wird ein Verfahren zur zumindest teilweisen Kompensation der asymmetrischen Verzögerung von über einen Übertragungskanal übertragenen Signalen 10 vorgeschlagen, das keine Änderung in der logischen Ebene des Kommunikations-Controllers des empfangenden Teilnehmers 36 erfordert. Vielmehr wird die Kompensation gemäß der vorliegenden Erfindung auf der physikalischen Ebene (Physical Layer) im Übertragungskanäl an einer oder mehreren beliebigen Stellen zwischen der Codierung des zu übertragenden Signals in dem sendenden Teilnehmer 14 und der Decodierung des empfangenen Signals in dem empfangenden Teilnehmer 36 vorgeschlagen. Dazu wird an einem beliebigen Punkt in der Netzwerkstruktur zwischen sendendem Teilnehmer 14 und empfangendem Teilnehmer 36 die asymmetrische Verzögerung zumindest teilweise kompensiert, indem diejenige steigende oder fallende Signalflanke, die aufgrund der Übertragung durch die Netzwerkstruktur eine geringere Verzögerung erfährt als die andere fallende bzw. steigende Signalflanke so weit verzögert wird, dass ihre Verzögerung in etwa der Verzögerung der stärker verzögerten fallenden bzw. steigenden Signalflanke entspricht. Dies führt zu einer Verringerung des Abstands zwischen den Verzögerungen der propagierten steigenden und fallenden Signalflanken und damit zu einer Reduzierung, vorzugsweise sogar zu einer Kompensation der asymmetrischen Verzögerung.

Die zusätzliche Verzögerung der aufgrund der Übertragung über den Übertragungskanal weniger stark verzögerten Signalflanke kann - wie gesagt - an einer beliebigen Stelle in der Netzwerkstruktur, also auch in dem sendenden Teilnehmer 14 oder in dem empfangenden Teilnehmer 36 oder in einem Kommunikations-Controller 16, 38 dieser Teilnehmer 14, 36 oder in einer Sende-Empfangs-Einheit (Transceiver) dieser Teilnehmer 14, 36 vorgenommen werden. Entscheidend ist, dass die zusätzliche Verzögerung im Sinne der vorliegenden Erfindung nach der Codierung des Signals in dem sendenden Teilnehmer 14 und noch vor der Decodierung des Signals in dem empfangenden Teilnehmer 36 erfolgt. Gemäß der vorliegenden Erfindung wird also eine programmierbare Asymmetriekompensation in den Übertragungskanal seriell in die Signalkette eingefügt. Durch die Asymmetriekompensation wird der in der Signalkette intrinsisch vorhandenen Signalasymmetrie entgegengewirkt.

Der erforderliche Betrag der Asymmetriekompensation wird im empfangenen Protokoll-Frame (dem empfangenen Datenrahmen) durch Messung ermittelt oder durch Festprogrammierung in einem Bustreiber-Baustein 44 des empfangenden Teilnehmers 36 ab Werk eingeprägt oder durch Festprogrammierung in der Netzwerkstruktur ab Werk (vom Fahrzeughersteller, in dessen Fahrzeug ein erfindungsgemäßes Datenübertragungssystem eingebaut wird) eingeprägt.

Ein Vorteil der vorliegenden Erfindung besteht darin, dass das gesamte Datenübertragungssystem robuster gegenüber unsymmetrischen Anteilen in den verbauten Komponenten wird und somit die Komponenten nicht strengen Toleranzvorgaben unterliegen müssen und somit günstigere Bauelemente und Komponenten eingesetzt werden können, ohne dass es zu Decodierungsfehlern aufgrund der asymmetrischen Verzögerung des übertragenen Signals 10 kommt. Außerdem kann die Übertragungssicherheit und damit die Verfügbarkeit des gesamten Datenübertragungssystems erhöht werden.

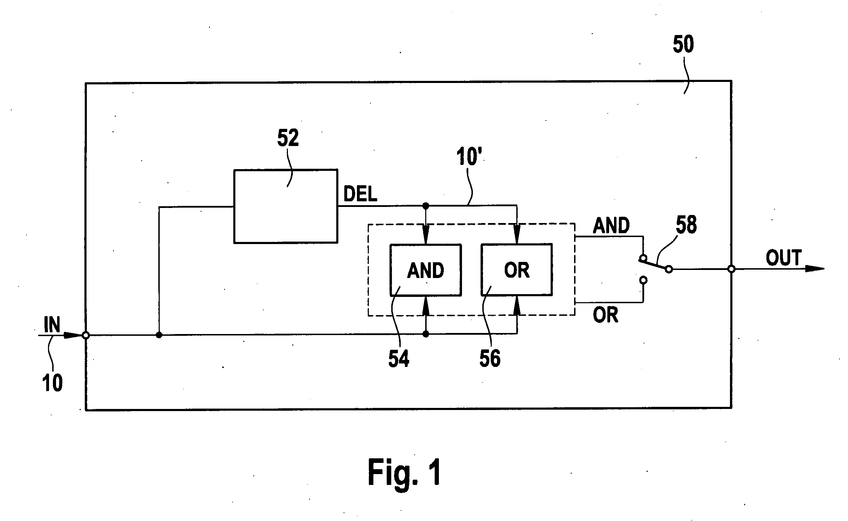

Zur Realisierung der vorliegenden Erfindung können eine oder mehrere Vorrichtungen zum Messen und zumindest teilweise Kompensieren der asymmetrischen Verzögerung an beliebigen Stellen in der Netzwerkstruktur angeordnet werden. Eine solche Vorrichtung ist beispielhaft in Figur 1 dargestellt und in ihrer Gesamtheit mit dem Bezugszeichen 50 bezeichnet. Die Vorrichtung 50 umfasst eine programmierbare Verzögerungseinheit 52, wie sie beispielsweise von der Firma Dallas Semiconductor Corp., Dallas, Texas, USA unter der Bezeichnung "DS 1021-50" angeboten und vertrieben wird. Eine solche Verzögerungseinheit 52 kann ein Signal gezielt um eine programmierbare Verzögerungsdauer, die beispielsweise in einem Bereich zwischen 10 und 140 ns liegt, mit einer Genauigkeit von weniger als 1 ns, vorzugsweise mit einer Genauigkeit von 0,5 ns, verzögern. Die Verzögerungsdauer wird durch Setzen oder Löschen mehrerer Bits, beispielsweise von 8 Bits, programmiert. Selbstverständlich können auch andere programmierbare Verzögerungseinheiten mit einem höheren oder niedrigeren Verzögerungsbereich und höherer oder niedrigerer Genauigkeit eingesetzt werden.

Ein an einen Eingang IN der Mess- und Kompensationsvorrichtung 50 anliegende Eingangssignal 10 wird zum einen direkt weitergeführt und zum anderen nach einem Abzweigpunkt in die programmierbare Verzögerungseinheit 52 geleitet. Das verzögerte Signal 10' am Ausgang der Verzögerungseinheit 52 ist mit DEL (Delayed) bezeichnet. Sowohl das ursprüngliche Eingangssignal 10 als auch das verzögerte Signal 10' werden entweder an einem AND-Gatter 54 konjugiert oder an einem OR-Gatter 56 disjungiert. Über einen Schalter 58, der beispielsweise als ein Transistor ausgebildet sein kann, wird entweder die Konjunktion (UND-Verknüpfung der Signale 10, 10') oder die Disjunktion (ODER-Verknüpfung der Signale 10, 10') an den Ausgang OUT der Vorrichtung 50 angelegt.

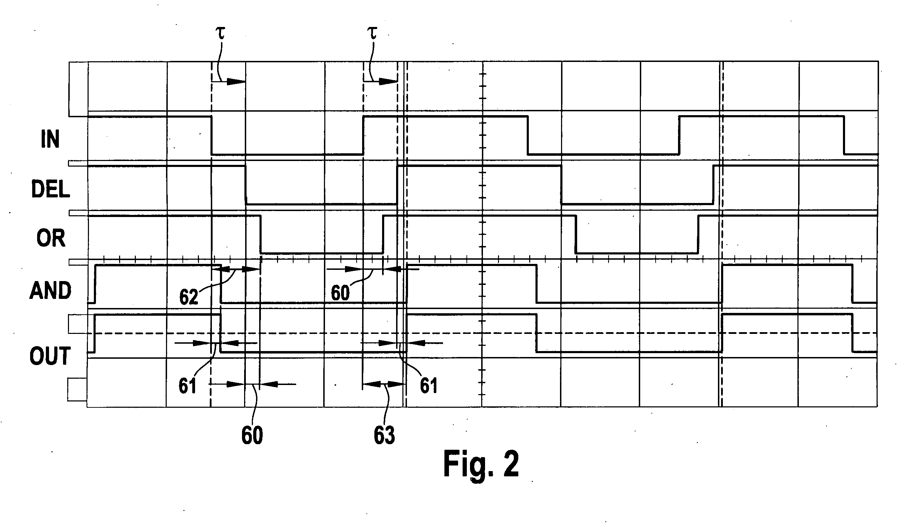

Die Auswirkung der Mess- und Kompensationsvorrichtung 50 auf den Signalverlauf ist in Figur 2 dargestellt. Das Eingangssignal IN wird exemplarisch um den Wert τ verzögert. Die Vereinigungsmenge der Bereiche, in denen das Eingangssignal IN und das verzögerte Signal DEL den Wert "1" aufweisen, ergibt das verfügbare Zwischensignal OR. Die Schnittmenge der Bereiche, in denen die Signale IN und DEL beide den Wert "1" aufweisen, ergibt das verfügbare Zwischensignal AND. Bei den in Figur 2 beispielhaft dargestellten Signalverläufen befindet sich der Schalter 58 in der in Figur 1 dargestellten Stellung auf AND, so dass das Ausgangssignal OUT dem Zwischensignal AND entspricht.

Mit dem Bezugszeichen 60 ist in Figur 2 die Verzögerung des Signals aufgrund der Signallaufzeit in dem OR-Gatter 56 bezeichnet. Ebenso ist mit dem Bezugszeichen 61 die Signalverzögerung des Zwischensignals AND aufgrund der Signallaufzeit in dem AND-Gatter 54 bezeichnet. Die zusätzliche Verzögerung einer fallenden Signalflanke durch die Mess- und Kompensationsvorrichtung 50 ergibt sich an dem OR-Zwischensignal und ist mit dem Bezugszeichen 62 bezeichnet. Die zusätzliche Verzögerung einer steigenden Signalflanke ergibt sich an dem AND-Zwischensignal und ist mit dem Bezugszeichen 63 bezeichnet. Wenn also am Ausgang OUT der Vorrichtung 50 das AND-Zwischensignal anliegt, wird die steigende Signalflanke des Signals 10 um den Wert τ zuzüglich der Verzögerung 61 aufgrund der Signallaufzeit in dem AND-Gatter 54 verzögert. Ebenso wird die fallende Signalflanke des Eingangssignals 10 um den Verzögerungswert τ zuzüglich der Verzögerung aufgrund der Signallaufzeiten in dem OR-Gatter 56 verzögert, falls an dem Ausgang OUT der Vorrichtung 50 das OR-Zwischensignal anliegt. Durch den Einsatz der erfindungsgemäßen Mess- und Kompensationsvorrichtung 50 können also gezielt steigende oder fallende Signalflanken des übertragenen Signals unter Berücksichtigung der Signallaufzeiten in den logischen Gattern 54 und 56 um den Verzögerungswert τ verzögert werden. Ob durch die Vorrichtung 50 die fallende oder die steigende Signalflanke verzögert wird, kann durch den Schalter 58 gewählt werden, die Verzögerungsdauer τ wird über die 8-Bit programmiert.

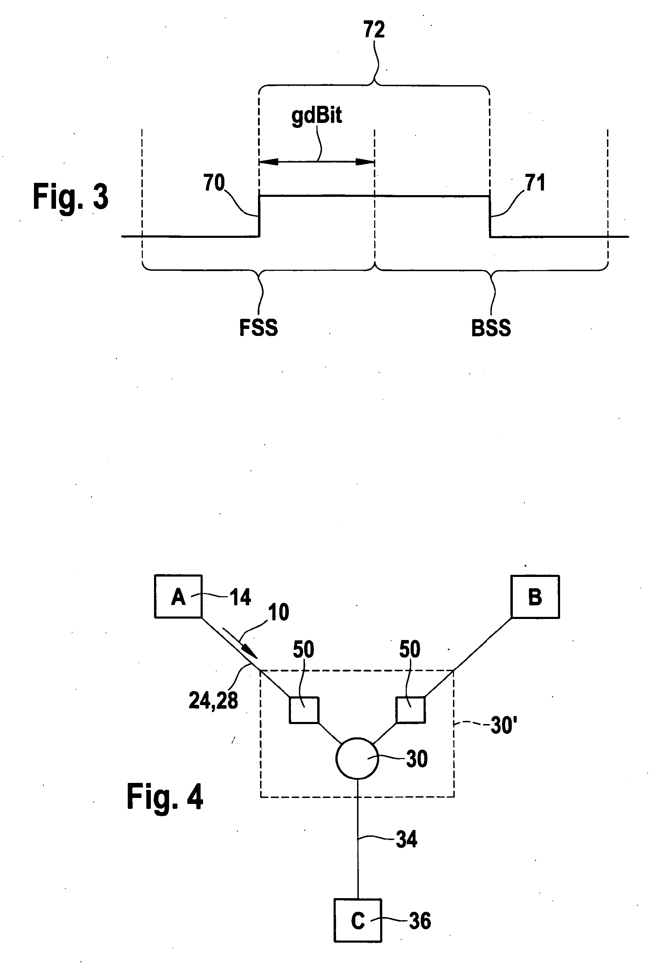

Zum Bestimmen des Verzögerungswertes τ, um den die steigende oder fallende Signalflanke des Signals 10 verzögert werden soll, wird zunächst die asymmetrische Verzögerung gemessen. Die asymmetrische Verzögerung kann beispielsweise anhand eines Abstands eines zwingend in einem in dem Datenübertragungssystem verwendeten Übertragungsprotokoll vorgesehenen Wechsels des Signals 10 von steigender zu fallender Flanke oder von fallender zu steigender Flanke gemessen werden (vgl. Figur 3). Im FlexRay-Übertragungsprotokoll ist es beispielsweise möglich, den Abstand zwischen einer steigenden Flanke 70 einer Frame Start Sequenz (FSS) und einer fallenden Flanke 71 einer Byte Start Sequenz (BSS) eines Datenrahmens zu messen. Der gemessene Abstand ist in Figur 3 mit dem Bezugszeichen 72 bezeichnet. Der nominale Abstand gdBit zwischen der steigenden Flanke 70 der Frame Start Sequenz FSS und dem Ende der FSS beträgt nominal 100 ns. Somit beträgt der nominale Abstand 72, falls die asymmetrische Verzögerung gleich 0 ist, gemäß FlexRay-Protokoll-Spezifikation v2.1 200 ns. Bei einem 8-fachen Oversampling entspricht dies genau 16 nominalen Sampling-Periodendauern. Der zur Kompensation der gemessenen asymmetrischen Verzögerung erforderliche Verzögerungswert τ kann beispielsweise über eine Kombinatorik oder einen geeigneten Berechnungsalgorithmus aus dem gemessenen Abstand 72 ermittelt werden.

Die Mess- und Kompensationsvorrichtung 50 kann über einen Prozessor, insbesondere einen digitalen Signalprozessor (DSP), oder eine Zustandsmaschine zur Abarbeitung eines Computerprogramms und zur Realisierung des erfindungsgemäßen Verfahrens zur Kompensation der asymmetrischen Verzögerungen auf dem Übertragungskanal aufweisen. Je nach Ausgestaltung der Erfindung kann das Computerprogramm das Einlesen des Verzögerungswertes τ aus einem Speicherelement oder das Messen der asymmetrischen Verzögerung und eine Ermittlung des Verzögerungswertes τ veranlassen. Anschließend wird die Verzögerungseinheit 52 - wiederum veranlasst durch das Computerprogramm - in Abhängigkeit dem ermittelten Verzögerungswert τ programmiert, damit die gewünschte zeitliche Verzögerung erzielt wird. In Abhängigkeit davon, ob die fallenden oder die steigenden Flanken des Signals 10 verzögert werden sollen, wird der Schalter 58 durch das Computerprogramm entsprechend angesteuert.

In Figur 4 ist eine mögliche Ausführungsform der vorliegenden Erfindung dargestellt. Figur 4 zeigt beispielhaft ein Datenübertragungssystem mit einer relativ einfachen Netzwerkstruktur. Das Datenübertragungssystem umfasst drei Teilnehmer A, B, C, zwischen denen über eine Netzwerkstruktur in einem Signal 10 codierte Daten übertragen werden können. An einer beliebigen Stelle in den aktiven oder passiven Netzwerken der Netzwerkstruktur kann eine erfindungsgemäße Mess- und Kompensationsvorrichtung 50 angeordnet sein. Insbesondere kann die Vorrichtung 50 in den Signalleitungen 24, 28, aber auch in der Signalleitung 34 angeordnet sein. Bei dem in Figur 4 dargestellten Ausführungsbeispiel ist eine Mess- und Kompensationsvorrichtung 50 an einer beliebigen Stelle in den Signalleitungen 24, 28 angeordnet und eine weitere Vorrichtung 50 in einer Signalleitung zwischen dem Teilnehmer B und dem aktiven Stern 30. Selbstverständlich ist es auch denkbar, dass die beiden Vorrichtungen 50 integraler Bestandteil der Transceiver (Sende-EmpfangsEinheiten) des aktiven Sterns 30 oder integraler Bestandteil des aktiven Sterns 30 selbst sind. Der aktive Stern 30 mit den beiden Vorrichtungen 50 als integraler Bestandteil ist in seiner Gesamtheit mit den Bezugszeichen 30' bezeichnet.

Der Verzögerungswert τ, um den eine steigende oder fallende Signalflanke des Signals 10 in den Vorrichtungen 50 verzögert wird, kann unter Abschätzung der voraussichtlichen Verzögerung durch den aktiven Stern 30 und die Verbindungsleitung 34 gewählt werden, damit die asymmetrische Verzögerung des Signals 10 beim Empfang in dem Teilnehmer 36 möglichst gering ist. Somit wird also bei der Ermittlung des Verzögerungswertes τ die noch bevorstehende, abgeschätzte oder früher einmal gemessene asymmetrische Verzögerung auf dem weiteren Übertragungsweg berücksichtigt. Es wäre allerdings auch denkbar, dass in der Verbindungsleitung 34, vorzugsweise möglichst nah an dem Teilnehmer C, eine weitere erfindungsgemäße Mess- und Kompensationsvorrichtung 50 (nicht dargestellt) vorgesehen ist, welche die asymmetrische Verzögerung aufgrund der Übertragung des Signals 10 über den aktiven Stern 30 und der Verbindungsleitung 34 (und möglicherweise noch weitere auf dem Übertragungskanal befindliche aktive und/oder passive Bauelemente) verringert, idealerweise kompensiert.

Die in die Netzwerkstruktur des Datenübertragungssystems aus Figur 4 eingebrachten erfindungsgemäßen Vorrichtungen 50 verfügen vorzugsweise über Mittel zum Erfassen, insbesondere zum Messen der asymmetrischen Verzögerung, so dass die Verzögerungszeit τ für die programmierbare Verzögerungseinheit 52, vorzugsweise für jeden einzelnen Datenrahmen, adaptiv eingestellt werden kann. Allerdings wäre es auch denkbar, bei bekannten Netztopologien die asymmetrische Verzögerung bereits im Vorfeld der Datenübertragung, beispielsweise ab Werk, zu ermitteln und die Verzögerungswerte τ dementsprechend fest vorzugeben. In diesem Fall könnte auf Mittel zum Messen der asymmetrischen Verzögerung in den Vorrichtungen 50 verzichtet werden.

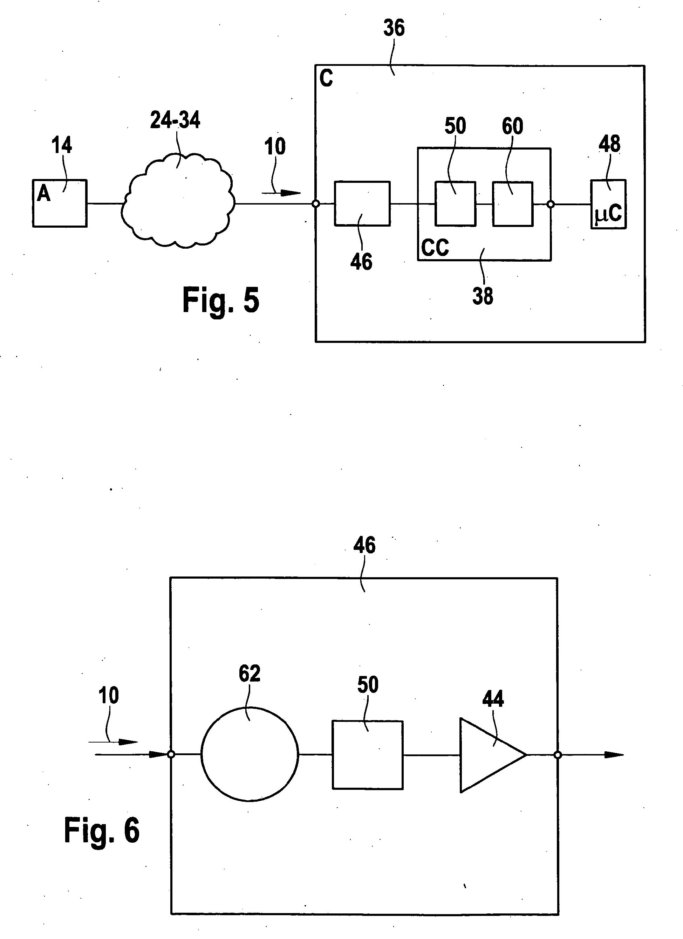

In Figur 5 ist ein weiteres Ausführungsbeispiel der vorliegenden Erfindung dargestellt. Dabei zeigt Figur 5 einen sendenden Teilnehmer 14 und einen empfangenden Teilnehmer 36 und dazwischen eine mehr oder weniger komplexe Netzwerkstruktur 24 - 34. Der empfangende Teilnehmer 36 weist einen Transceiver 46 auf, der auch als Sende-Empfangs-Einheit oder in einem einfachen Fall als Pegelwandler bezeichnet werden kann. Das über den Transceiver 46 empfangene Signal 10 gelangt an den Kommunikations-Controller 38 und dann weiter an den Host-Prozessor 48 des empfangenden Teilnehmers 36. Der Kommunikations-Controller 38 umfasst eine Decodiereinheit 60, die auch als Abtastmittel oder als Decoder bezeichnet wird. Der Decoder 60 dient zum Abtasten der in dem empfangenen Signal 10 codierten Datenbits in der bereits oben beschriebenen Art und Weise. Dem Decodierer 60 vorgeschaltet ist eine erfindungsgemäße Mess- und Kompensationsvorrichtung 50 zum Messen und zumindest teilweise Kompensieren der asymmetrischen Verzögerung.

In Figur 6 ist ein weiteres Ausführungsbeispiel der vorliegenden Erfindung dargestellt, wobei die erfindungsgemäße Mess- und Kompensationsvorrichtung 50 in einem Transceiver 46 angeordnet ist. Der Transceiver 46 umfasst einen so genannten Transceiver-Kern 62 zur Realisierung der zentralen Transceiver-Funktionen, sowie eine Treibereinheit 44, die auch als Bustreiber bezeichnet werden kann. Durch die Mess- und Kompensationsvorrichtung 50 in dem Transceiver 46 wird die asymmetrische Verzögerung des empfangenen Signals 10 verringert, idealerweise kompensiert, noch bevor das Signal 10 decodiert wird.

## Patentansprüche

1. Verfahren zur Übertragung von in einem Signal (10) codierten Daten zwischen einem sendenden Teilnehmer (14) und einem empfangenden Teilnehmer (36) eines Datenübertragungssystems über eine Netzwerkstruktur (24, 34) des Datenübertragungssystems,
wobei die in dem Signal (10) codierten Daten in Datenrahmen mit definiertem Aufbau bitweise seriell übertragen werden, in dem empfangenden Teilnehmer (36) jedes Bit der in dem Signal codierten Daten abgetastet wird und das Signal (10) aufgrund der Übertragung über die Netzwerkstruktur (24 34) asymmetrisch verzögert wird,
wobei an mindestens einem Punkt in der Netzwerkstruktur (24, 34) die asymmetrische Verzögerung des Signals (10) ermittelt und bevor der empfangende Teilnehmer (36) die Bits der in dem Signal (10) codierten Daten abtastet zumindest teilweise kompensiert wird,
wobei anhand der ermittelten asymmetrischen Verzögerung ein geeigneter Verzögerungswert (τ) ermittelt wird und wobei der ermittelte Verzögerungswert (τ) einer in der Netzwerkstruktur (24 34) jedenfalls nach der Kodierung des zu übertragenden Signals (10) in dem sendenden Teilnehmer (14) und vor der Dekodierung des Signals (10) in dem empfangenden Teilnehmer (36) angeordneten programmierbaren Verzögerungseinheit (52) zugeführt wird, durch welche eine aufgrund der Übertragung über die Netzwerkstruktur (24, 34) weniger stark verzögerte Signalflanke um den ermittelten Verzögerungswert (τ) verzögert wird, um die asymmetrische Verzögerung zumindest teilweise zu kompensieren,
**dadurch gekennzeichnet, dass** bei der Ermittlung des Verzögerungswertes (τ) eine noch auf einem weiteren Übertragungsweg bevorstehende asymmetrische Verzögerung berücksichtigt wird.

2. Verfahren nach Anspruch 1, **dadurch gekennzeichnet, dass** die noch bevorstehende asymmetrische Verzögerung abgeschätzt wird.

3. Verfahren nach Anspruch 1, **dadurch gekennzeichnet, dass** die noch bevorstehende asymmetrische Verzögerung vor dem Verfahren ermittelt wurde.

4. Verfahren nach Anspruch 2, **dadurch gekennzeichnet, dass** zu der Abschätzung der noch bevorstehenden asymmetrischen Verzögerung eine voraussichtliche Verzögerung durch einen aktiven Stern (30) und eine Verbindungsleitung (34) abgeschätzt wird.

5. Verfahren nach Anspruch 1, **dadurch gekennzeichnet, dass** die asymmetrische Verzögerung des Signals (10) im Vorfeld der Datenübertragung ermittelt und während der Datenübertragung kompensiert wird.

6. Verfahren nach Anspruch 5, **dadurch gekennzeichnet, dass** die asymmetrische Verzögerung des Signals (10) ab Werk ermittelt, abgespeichert und zur Kompensation wieder aufgerufen wird.

7. Verfahren nach Anspruch 5, **dadurch gekennzeichnet, dass** die asymmetrische Verzögerung des Signals (10) anhand des einsatzbereiten Datenübertragungssystems ermittelt, abgespeichert und zur Kompensation wieder aufgerufen wird.

8. Verfahren nach Anspruch 6 oder 7, **dadurch gekennzeichnet, dass** die asymmetrische Verzögerung abgeschätzt, modelliert oder gemessen wird.

9. Verfahren nach Anspruch 1, **dadurch gekennzeichnet, dass** die asymmetrische Verzögerung des Signals (10) während der Datenübertragung ermittelt und kompensiert wird.

10. Verfahren nach Anspruch 9, **dadurch gekennzeichnet, dass** die Ermittlung und die Kompensation der asymmetrischen Verzögerung des Signals (10) möglichst zeitnah zueinander, vorzugsweise unmittelbar nacheinander, ausgeführt wird.

11. Verfahren nach Anspruch 9 oder 10, **dadurch gekennzeichnet, dass** die asymmetrische Verzögerung abgeschätzt, modelliert oder gemessen wird.

12. Verfahren nach Anspruch 9 oder 10, **dadurch gekennzeichnet, dass** die asymmetrische Verzögerung anhand eines Abstands eines zwingend in einem in dem Datenübertragungssystem verwendeten Übertragungsprotokoll vorgesehenen Wechsels des Signals (10) von steigender zu fallender Flanke oder von fallender zu steigender Flanke gemessen wird.

13. Verfahren nach Anspruch 12, **dadurch gekennzeichnet, dass** der Abstand (72) zwischen einer steigenden Flanke (74) einer Frame Start Sequenz (FSS) und einer fallenden Flanke (76) einer Byte Start Sequenz (BSS) eines Datenrahmens gemessen wird.

14. Verfahren nach Anspruch 1, **dadurch gekennzeichnet, dass** der Verzögerungswert (τ) mittels einer Kombinatorik oder eines geeigneten Berechnungsalgorithmus anhand der ermittelten asymmetrischen Verzögerung ermittelt wird.

15. Verfahren nach einem der Ansprüche 1 bis 14, **dadurch gekennzeichnet, dass** die aufgrund der Übertragung über die Netzwerkstruktur (24 bis 34) weniger stark verzögerte Signalflanke mit einer Genauigkeit von mindestens 1 ns, vorzugsweise mit einer Genauigkeit von 0,5 ns oder 0,1 ns, verzögert wird.

16. Vorrichtung (50) in einer Netzwerkstruktur (24,34) eines Datenübertragungssystems, wobei das Datenübertragungssystem mehrere Teilnehmer (14, 36), die zwischen den Teilnehmern (14, 36) ausgebildete Netzwerkstruktur (24, 34) und Mittel zum bitweise seriellen Übertragen von in einem Signal (10) codierten Daten zwischen einem sendenden Teilnehmer (14) und einem empfangenden Teilnehmer (36) über die Netzwerkstruktur (24, 34) in Datenrahmen mit definiertem Aufbau aufweist,
wobei die Datenübertragung über die Netzwerkstruktur (24, 34) eine asymmetrische Verzögerung des Signals (10) bewirkt,
wobei in dem empfangenden Teilnehmer (36) des Datenübertragungssystems Mittel (60) zum Abtasten eines jeden Bits der in dem Signal (10) codierten Daten angeordnet sind, und wobei die Vorrichtung (50) vor den Abtastmitteln (60) in dem empfangenden Teilnehmer (36) angeordnet ist,
**dadurch gekennzeichnet, dass** die Vorrichtung Mittel aufweist, die asymmetrische Verzögerung des Signals (10) ermitteln, und Mittel aufweist, die anhand der ermittelten asymmetrischen Verzögerung einen geeigneten Verzögerungswert (τ) ermitteln und bei der Ermittlung des Verzögerungswertes (τ) eine noch bevorstehende asymmetrische Verzögerung auf einem weiteren Übertragungsweg berücksichtigen,
eine programmierbare Verzögerungseinheit (52) aufweist, um eine aufgrund der Übertragung über die Netzwerkstruktur (24, 34) weniger stark verzögerte Signalflanke den ermittelten Verzögerungswert (τ) zu verzögern, um die asymmetrische Verzögerung zumindest teilweise zu kompensieren.

17. Vorrichtung (50) nach Anspruch 16, **dadurch gekennzeichnet, dass** sie in einem aktiven Stern (26, 30; 30') des Datenübertragungssystems angeordnet ist.

## Claims

1. Method for transmitting data coded in a signal (10) between a transmitting subscriber (14) and a receiving subscriber (36) of a data transmission system via a network structure (24, 34) of the data transmission system,
the data coded in the signal (10) being serially transmitted bit by bit in data frames with a defined structure, each bit of the data coded in the signal being sampled in the receiving subscriber (36), and the signal (10) being asymmetrically delayed on account of the transmission via the network structure (24, 34),
the asymmetrical delay of the signal (10) being determined at at least one point in the network structure (24, 34) and being at least partially compensated for before the receiving subscriber (36) samples the bits of the data coded in the signal (10),
a suitable delay value (τ) being determined on the basis of the determined asymmetrical delay, and the determined delay value (τ) being supplied to a programmable delay unit (52) which is arranged in the network structure (24, 34) in any case after the coding of the signal (10) to be transmitted in the transmitting subscriber (14) and before the decoding of the signal (10) in the receiving subscriber (36) and delays a signal edge, which is delayed to a lesser extent on account of the transmission via the network structure (24, 34), by the determined delay value (τ) in order to at least partially compensate for the asymmetrical delay,
**characterized in that** an asymmetrical delay which is still imminent on a further transmission path is taken into account when determining the delay value (τ).

2. Method according to Claim 1, **characterized in that** the asymmetrical delay which is still imminent is estimated.

3. Method according to Claim 1, **characterized in that** the asymmetrical delay which is still imminent was determined before the method.

4. Method according to Claim 2, **characterized in that**, in order to estimate the asymmetrical delay which is still imminent, a likely delay is estimated by an active star (30) and a connecting line (34).

5. Method according to Claim 1, **characterized in that** the asymmetrical delay of the signal (10) is determined prior to data transmission and is compensated for during data transmission.

6. Method according to Claim 5, **characterized in that** the asymmetrical delay of the signal (10) is determined ex works, is stored and is called up again for the purpose of compensation.

7. Method according to Claim 5, **characterized in that** the asymmetrical delay of the signal (10) is determined using the ready-to-use data transmission system, is stored and is called up again for the purpose of compensation.

8. Method according to Claim 6 or 7, **characterized in that** the asymmetrical delay is estimated, modelled or measured.

9. Method according to Claim 1, **characterized in that** the asymmetrical delay of the signal (10) is determined and compensated for during data transmission.

10. Method according to Claim 9, **characterized in that** the determination of and the compensation for the asymmetrical delay of the signal (10) are carried out as closely as possible in terms of time, preferably in immediate succession.

11. Method according to Claim 9 or 10, **characterized in that** the asymmetrical delay is estimated, modelled or measured.

12. Method according to Claim 9 or 10, **characterized in that** the asymmetrical delay is measured using an interval of a change of the signal (10) from a rising to a falling edge or from a falling to a rising edge, which change is necessarily provided in a transmission protocol used in the data transmission system.

13. Method according to Claim 12, **characterized in that** the interval (72) between a rising edge (74) of a frame start sequence (FSS) and a falling edge (76) of a byte start sequence (BSS) of a data frame is measured.

14. Method according to Claim 1, **characterized in that** the delay value (τ) is determined on the basis of the determined asymmetrical delay using combinatorics or a suitable calculation algorithm.

15. Method according to one of Claims 1 to 14, **characterized in that** the signal edge which is delayed to a lesser extent on account of the transmission via the network structure (24, 34) is delayed with an accuracy of at least 1 ns, preferably with an accuracy of 0.5 ns or 0.1 ns.

16. Apparatus (50) in a network structure (24, 34) of a data transmission system, the data transmission system having a plurality of subscribers (14, 36), the network structure (24, 34) formed between the subscribers (14, 36) and means for serially transmitting data coded in a signal (10) bit by bit between a transmitting subscriber (14) and a receiving subscriber (36) via the network structure (24, 34) in data frames with a defined structure,
the data transmission via the network structure (24, 34) giving rise to an asymmetrical delay of the signal (10),
means (60) for sampling each bit of the data coded in the signal (10) being arranged in the receiving subscriber (36) of the data transmission system,
and the apparatus (50) being arranged upstream of the sampling means (60) in the receiving subscriber (36),
**characterized in that** the apparatus has means which determine the asymmetrical delay of the signal (10) and has means which determine a suitable delay value (τ) on the basis of the determined asymmetrical delay and take into account an asymmetrical delay which is still imminent on a further transmission path when determining the delay value (τ),
and has a programmable delay unit (52) for delaying a signal edge, which is delayed to a lesser extent on account of the transmission via the network structure (24, 34) by the determined delay value (τ) in order to at least partially compensate for the asymmetrical delay.

17. Apparatus (50) according to Claim 16, **characterized in that** it is arranged in an active star (26, 30; 30') of the data transmission system.

## Revendications

1. Procédé de transmission de données codées en un signal (10) entre un abonné émetteur (14) et un abonné récepteur (36) d'un système de transmission de données par le biais d'une structure de réseau (24, 34) du système de transmission de données,
les données codées en le signal (10) étant transmises en série bit par bit dans des trames de données ayant une structure définie, chaque bit des données codées en le signal étant échantillonné dans l'abonné récepteur (36) et le signal (10) étant retardé de manière asymétrique en raison de la transmission par le biais de la structure de réseau (24, 34),
le retard asymétrique du signal (10) étant déterminé en au moins un point dans la structure de réseau (24, 34) et étant compensé au moins partiellement avant que l'abonné récepteur (36) n'échantillonne les bits des données codées en le signal (10),
une valeur de retard (τ) appropriée étant déterminée au moyen du retard asymétrique déterminé et la valeur de retard (τ) déterminée étant acheminée, dans tous les cas après le codage du signal (10) à transmettre dans l'abonné émetteur (14) et avant le décodage du signal (10) dans l'abonné récepteur (36), à une unité à retard programmable (52) disposée dans la structure de réseau (24, 34), par le biais de laquelle un front de signal moins fortement retardé en raison de la transmission par le biais de la structure de réseau (24, 34) est retardé de la valeur de retard (τ) déterminée afin de compenser au moins partiellement le retard asymétrique, **caractérisé en ce que** lors de la détermination de la valeur de retard (τ), un retard asymétrique encore imminent sur une autre voie de transmission est pris en compte.

2. Procédé selon la revendication 1, **caractérisé en ce que** le retard asymétrique encore imminent est estimé.

3. Procédé selon la revendication 1, **caractérisé en ce que** le retard asymétrique encore imminent est déterminé avant le procédé.

4. Procédé selon la revendication 2, **caractérisé en ce que** pour estimer le retard asymétrique encore imminent, un retard probable à travers une étoile active (30) et une ligne de liaison (34) est estimé.

5. Procédé selon la revendication 1, **caractérisé en ce que** le retard asymétrique du signal (10) est déterminé au préalable de la transmission de données et compensé pendant la transmission de données.

6. Procédé selon la revendication 5, **caractérisé en ce que** le retard asymétrique du signal (10) est déterminé en usine, mémorisé et rappelé pour la compensation.

7. Procédé selon la revendication 5, **caractérisé en ce que** le retard asymétrique du signal (10) est déterminé au moyen du système de transmission de données prêt à l'emploi, mémorisé et rappelé pour la compensation.

8. Procédé selon la revendication 6 ou 7, **caractérisé en ce que** le retard asymétrique est estimé, modélisé ou mesuré.

9. Procédé selon la revendication 1, **caractérisé en ce que** le retard asymétrique du signal (10) est déterminé et compensé pendant la transmission de données.

10. Procédé selon la revendication 9, **caractérisé en ce que** la détermination et la compensation du retard asymétrique du signal (10) sont effectuées le plus près possible l'une de l'autre dans le temps, de préférence immédiatement l'une après l'autre.

11. Procédé selon la revendication 9 ou 10, **caractérisé en ce que** le retard asymétrique est estimé, modélisé ou mesuré.

12. Procédé selon la revendication 9 ou 10, **caractérisé en ce que** le retard asymétrique est mesuré au moyen d'un écart entre un changement du signal (10) de front montant en front descendant ou de front descendant en front montant prévu dans un protocole de transmission obligatoirement utilisé dans le système de transmission de données.

13. Procédé selon la revendication 12, **caractérisé en ce que** l'écart (72) est mesuré entre un front montant (74) d'une séquence de début de trame (FSS) et un front descendant (76) d'une séquence de début d'octet (BSS) d'une trame de données.

14. Procédé selon la revendication 1, **caractérisé en ce que** la valeur de retard (τ) est déterminée au moyen d'un calcul combinatoire ou d'un algorithme de calcul approprié au moyen du retard asymétrique déterminé.

15. Procédé selon l'une des revendications 1 à 14, **caractérisé en ce que** le front de signal moins fortement retardé en raison de la transmission par le biais de la structure de réseau (24, 34) est retardé avec une précision d'au moins 1 ns, de préférence avec une précision de 0,5 ns ou de 0,1 ns.

16. Dispositif (50) dans une structure de réseau (24, 34) d'un système de transmission de données, le système de transmission de données présentant plusieurs abonnés (14, 36), la structure de réseau (24, 34) formée entre les abonnés (14, 36) et des moyens pour la transmission en série bit par bit de données codées en un signal (10) entre un abonné émetteur (14) et un abonné récepteur (36) par le biais de la structure de réseau (24, 34) dans des trames de données ayant une structure définie,
la transmission de données par le biais de la structure de réseau (24, 34) provoquant un retard asymétrique du signal (10),
des moyens (60) pour échantillonner chacun des bits des données codées en le signal (10) étant disposés dans l'abonné récepteur (36) du système de transmission de données,
et le dispositif (50) étant disposé avant les moyens d'échantillonnage (60) dans l'abonné récepteur (36),
**caractérisé en ce que** le dispositif présente des moyens qui déterminent le retard asymétrique du signal (10), présente des moyens qui déterminent une valeur de retard (τ) appropriée au moyen du retard asymétrique déterminé et tiennent compte, lors de la détermination de la valeur de retard (τ), d'un retard asymétrique encore imminent sur une autre voie de transmission,
et présente une unité à retard programmable (52) pour retarder un front de signal moins fortement retardé en raison de la transmission par le biais de la structure de réseau (24, 34) de la valeur de retard (τ) déterminée afin de compenser au moins partiellement le retard asymétrique.

17. Dispositif (50) selon la revendication 16, **caractérisé en ce qu'**il est disposé dans une étoile active (26, 30 ; 30') du système de transmission de données.
